**Europäisches Patentamt**

**European Patent Office**

**Office européen des brevets**

(19)

(11) Veröffentlichungsnummer: **0 047 476**
**B1**

(12) # EUROPÄISCHE PATENTSCHRIFT

(45) Veröffentlichungstag der Patentschrift:
27.08.86

(51) Int. Cl.⁴: **H 04 B 3/14**, H 04 L 25/03,
H 03 H 7/18

(21) Anmeldenummer: **81106839.4**

(22) Anmeldetag: **01.09.81**

(54) **Entzerrerschaltung für Nachrichtensignale.**

(30) Priorität: **08.09.80 DE 3033762**

(43) Veröffentlichungstag der Anmeldung:
**17.03.82 Patentblatt 82/11**

(45) Bekanntmachung des Hinweises auf die Patenterteilung:
**27.08.86 Patentblatt 86/35**

(84) Benannte Vertragsstaaten:
**AT BE CH FR GB LI NL SE**

(56) Entgegenhaltungen:
**DE - B - 1 241 502**
**GB - A - 1 515 355**
**US - A - 3 800 265**

**IEEE TRANSACTIONS ON CIRCUITS AND SYSTEMS,**
**Vol. CAS-22, Nr. 5, Mai 1975, New York, FRANZ BRGLEZ**
**"Inductorless variable equalizers", Seiten 415-419**
**IEEE TRANSACTIONS ON CIRCUITS AND SYSTEMS,**
**vol. CAS-24, nr. 6, Juni 1977, New York, SEIYA SHIDA**
**AND KEIJI SUZUKI "Variable equalizer with differential**
**amplifiers", Seiten 318-320**

(73) Patentinhaber: **Siemens Aktiengesellschaft Berlin und**
**München, Wittelsbacherplatz 2, D-8000 München 2 (DE)**

(72) Erfinder: **Ebenhöh, Peter, Dipl.-Ing.,**
**Gabriele-Münter-Strasse 17, D-8000 München 71 (DE)**

# Beschreibung

Die Erfindung betrifft eine Entzerrerschaltung für Nachrichtensignale, die in der Art eines aktiven Bode-Entzerrers ausgebildet ist, unter Verwendung eines mit dem Eingangssignal beaufschlagten Verstärkers mit gegenphasigen Ausgängen und mit einer nachgeschalteten Brückenschaltung.

In der Zeitschrift BSTJ 1938, Vol 17, Seiten 229 bis 244, wurden von H.W. Bode variable Entzerrerschaltungen angegeben, für die sich auch der Ausdruck Bode-Entzerrer eingebürgert hat. Bekanntlich handelt es sich dabei um Schaltungen, bei denen dem Grundkonzept nach ein überbrücktes T-Glied verwendet wird. Dabei sind dem Überbrückungszweig und dem Querzweig zusätzliche Schaltungen zugeordnet, die auch als wellenwiderstandsrichtige Hilfsvierpole bezeichnet werden. Die Wirkungsweise und auch die Anwendungsmöglichkeiten solcher Entzerrer sind für sich bekannt, so dass hier im einzelnen nicht darauf eingegangen werden muss. Die Übertragungsfunktion $T_r$ (j$\omega$) solcher Entzerrer lässt sich allgemein folgendermassen darstellen.

$$T_r (j\omega) = \frac{T(j\omega)}{T_o} = \frac{1 - \vartheta H_o \cdot H(j\omega)}{1 + \vartheta H_o\, H(j\omega)} \qquad (1)$$

wobei:
$T_o^{-1} = q_o = e^{a_o}$ der Grunddämpfungsfaktor,
$\vartheta$ eine reelle Schaltkonstante mit $|\vartheta| \leq 1$,
$H_o$ eine schaltungsabhängige Hubkonstante,
$H(j\omega)$ eine den Frequenzgang der Übertragungsfunktion bestimmende Funktion mit $|H(j\omega)| \leq 1$
bedeutet.

Die vorstehend angegebenen Entzerrer sind mit konzentrierten Elementen, also mit Widerständen, Spulen und Kondensatoren realisiert. Will man mit den genannten Strukturen Dämpfungsentzerrer mit grossen Dämpfungshüben für $|\vartheta| < 1$ realisieren, dann steigt die für einen vorgegebenen Dämpfungshub notwendige Grunddämpfung rapide an, was wiederum den Einsatz zusätzlicher Verstärkerschaltungen erfordert.

In dem Bestreben, hier zumindest teilweise Abhilfe zu schaffen, sind zwischenzeitlich auch aktive Entzerrerschaltungen angegeben worden. Ein Entzerrer, der zumindest in gewissem Sinn als aktiver Bode-Entzerrer bezeichnet werden kann, ist in der Zeitschrift IEEE Transactions on Circuits and Systems, VOL. CAS-22, Nr. 5, Mai 1975, Seiten 415 bis 418 angegeben. Die bei diesem bekannten Entzerrer auftretende Schwierigkeit ist vor allem darin zu sehen, dass eine beidseitige Auslenkung nur mit Hilfe eines variablen negativen Widerstandes möglich ist. Dies beschränkt den Anwendungsbereich auf Frequenzen, die unter 10 kHz liegen.

Ein Entzerrer der einleitend angegebenen Art wird für Frequenzen, die unterhalb von 10MHz liegen, in der Literaturstelle IEEE Transactions on Circuits and Systems, VOL. CAS-24, Nr. 6, Juni 1977, Seiten 318 bis 320 angegeben. Dabei wird die Übertragungsfunktion (1) in der Form:

$$T_r(j\omega) = 2\left(\frac{1}{2} - T_1(j\omega)\right), \quad T_1(j\omega) = \frac{\vartheta H_o\, H(j\omega)}{1 + \vartheta H_o \cdot H(j\omega)}$$

unter Benützung von 2 Operationsverstärkern mit Differenz-Eingang und Differenz-Ausgang mit Hilfe von Gegenkopplungen realisiert. Die bekannte Schaltung hat die Eigenschaft, dass der Maximalhub auf $\pm$ 9 dB begrenzt ist, wobei dieser Maximalhub nur mit $Z(j\omega)$ als Reaktanznetzwerk erreicht wird.

Die Grunddämpfung ist nicht frei wählbar; sie beträgt unabhängig vom Hub 6 dB. Die Schaltkonstante $|\vartheta| \leq 0,5$. Bei der praktischen Realisierung dieser bekannten Schaltung kommt erschwerend ferner hinzu, dass zwei Reaktanzzweipole untereinander völlig gleichartig ausgebildet sein müssen. Schon aus diesem Grund ist die Schaltung verhältnismässig anfällig gegenüber Herstellungstoleranzen, da Abweichung von den Sollwerten der Schaltelemente auch die Symmetrie der Schaltung bereits erheblich stören.

Schliesslich sind aus der US-PS 3 800 265 aktive Gruppenlaufzeitentzerrer mit einer vorgegebenen Übertragungsfunktion bekannt, bei denen Widerstände $Z_a$ und $Z_b$ jeweils an gegenphasige Ausgänge eines Verstärkers angeschaltet sind. Um die vorgegebene Übertragungsfunktion zu realisieren, sind dies aktive Allpass-Schaltungen, bei denen entweder der Widerstand $Z_b$ oder der Widerstand $Z_a$ reell ist. Entsprechend ist dann der andere Widerstand imaginär.

Der Erfindung liegt die Aufgabe zugrunde, den erwähnten Schwierigkeiten nach Möglichkeit abzuhelfen und insbesondere Schaltungen für einen aktiven Bode-Entzerrer anzugeben, bei denen die Anfälligkeit gegenüber Herstelltoleranzen möglichst minimiert ist und bei denen darüber hinaus auch in einem weit oberhalb von 10 MHz liegenden Frequenzbereich die einleitend angegebene Übertragungsfunktion des passiven Bode-Entzerrers erhalten bleibt. Darüber hinaus sollen selbst mit verlustbehafteten Netzwerken wesentlich grössere Maximalhübe erreicht werden können.

Ausgehend von einem Entzerrer der einleitend genannten Art, wird diese Aufgabe erfindungsgemäss dadurch gelöst, dass ein erster Verstärkerausgang mit einem ersten Ende eines einen ersten Brückenzweig bildenden ersten reellen Widerstandes und mit einem ersten Ende eines einen zweiten Brückenzweig bildenden zweiten reellen Widerstandes verbunden ist, dass ein zweiter Verstärkerausgang mit einem ersten Ende eines einen dritten Brückenzweig bildenden dritten reellen Widerstandes und einem ersten Ende eines einen vierten Brückenzweig bildenden Zweipols, der von einem mit Abschlusswiderstand beschalteten, wellenwiderstandsrichtig überbrückten T-Glied gebildet wird und dem eingangsseitig entweder ein vierter reeller Widerstand in Serie oder ein fünfter reeller Widerstand parallel vorgeschaltet ist, verbunden ist, dass ein zweites Ende des ersten reellen Widerstandes und ein zweites Ende des Zweipols auf Bezugspotential liegen, und dass an den miteinander verbundenen zweiten Enden des zweiten reellen Widerstandes und des dritten reellen Widerstandes die Ausgangsspannung der Entzerrerschaltung gegen Bezugspotential anliegt.

Vorteilhafte Ausgestaltungen und Anwendungen sind in den Unteransprüchen angegeben.

Anhand von Ausführungsbeispielen wird nachstehend die Erfindung noch näher erläutert. Es zeigen in der Zeichnung

Fig. 1 ein Schaltbild mit einem Transistor als Verstärker,

Fig. 2 das in Fig. 1 mit $P_1$ bezeichnete wellenwiderstandsrichtige überbrückte T-Glied,

Fig. 3 eine auf Fig. 1 und 2 aufbauende allgemeine Schaltung.

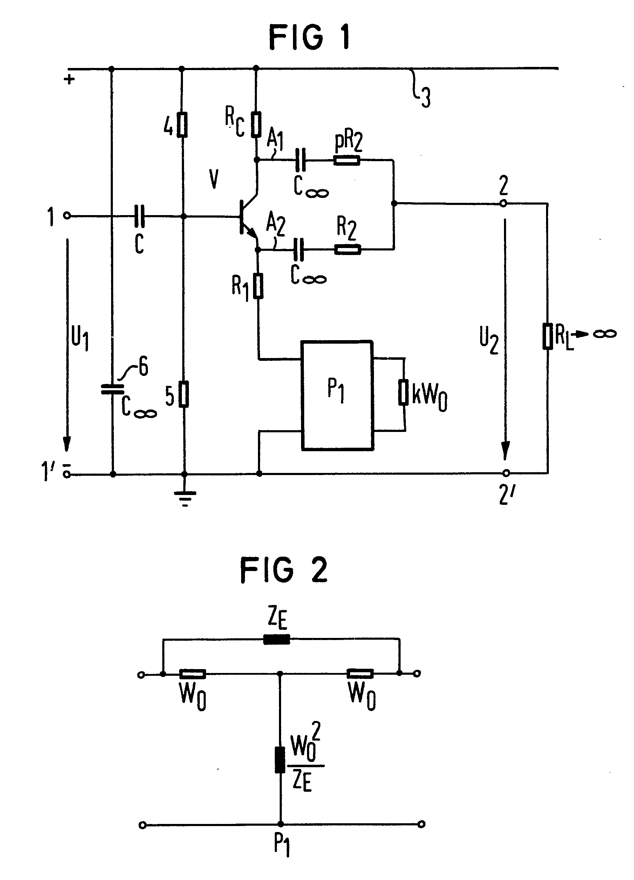

Im Ausführungsbeispiel von Fig. 1 wird als Verstärker V eine Transistorstufe verwendet, die über eine Gleichspannungsversorgungsleitung 3 am positiven Anschluss einer Gleichspannungsquelle liegt, deren negativer Anschluss auf der mit Bezugspotential kenntlich gemachten Anschlussleitung liegt. Die Basisvorspannung wird in bekannter Weise über einen Spannungsteiler aus den Widerständen 4 und 5 gewonnen, auch liegt zwischen dem positiven und dem negativen Anschluss der Gleichspannungsquelle ein Kondensator 6 mit dem Kapazitätswert $C\infty$. Der Hinweis «$\infty$» hat dabei zu bedeuten, dass sich hier eine Gleichspannungsabtrennung ergeben soll und dabei der Kapazitätswert des zugehörigen Kondensators so gross ist, dass Wechselsignale praktisch kurzgeschlossen werden. Die Eingangswechselspannung $U_1$ liegt zwischen den Anschlussklemmen 1 und 1' und wird über einen Koppelkondensator C der Basis des Transistors zugeführt. Die Ausgangsklemmen sind mit 2 und 2' bezeichnet, und es kann dort die Ausgangswechselspannung U2 an einem Lastwiderstand $R_L$ abgenommen werden. Das dort ebenfalls dargestellte «$\infty$» -Zeichen soll kenntlich machen, dass der Abschlusswiderstand $R_L$ die Verstärkerstufe V möglichst nicht belasten soll. Zwischen dem Gleichspannungsanschluss 3 und dem Kollektor liegt ein Widerstand $R_c$, zwischen dem Emitter und Bezugspotential liegt ein Widerstand $R_1$, dem ein Vierpol $P_1$ zugeordnet ist. Der Vierpol $P_1$ ist mit dem Abschlusswiderstand $kW_o$ ($O \leq k \leq \infty$) abgeschlossen. Dem Kollektor folgt ein Kondensator, dessen Kapazitätswert ebenfalls mit $C\infty$ angegeben ist, ebenso dem Emitter. Auch hier soll kenntlich gemacht werden, dass diese Kondensatoren lediglich der Gleichstromabtrennung dienen und für Wechselsignale des Betriebsfrequenzbereiches praktisch keinen Blindwiderstand darstellen. Diesem Kondensator ist dann im Kollektorzweig ein Widerstand $pR_2$ und im Emitterzweig ein Widerstand $R_2$ nachgeschaltet. Die Zusammenschaltung dieser beiden Widerstände führt unmittelbar auf die Ausgangsklemme 2. Das dargestellte Schaltungskonzept lässt erkennen, dass die Verstärkerstufe V zwei Ausgänge $A_1$ und $A_2$ hat, an denen die Signale zueinander in Gegenphase liegen. Die

gezeichnete Schaltung hat die Eigenschaft einer Brückenschaltung, und es wird demzufolge der erste Brückenzweig von den Widerständen pR2 und $R_2$ gebildet. Der zweite Brückenzweig wird gebildet vom Widerstand $R_c$, der ja über den Kondensator 6 wechselspannungsmässig auf Bezugspotential liegt, und weiterhin vom Eingangswiderstand des wellenwiderstandsrichtigen überbrückten T-Gliedes $P_1$ zusammen mit dem im Ausführungsbeispiel in Serie vorgeschalteten Widerstand $R_1$.

Zu den Eigenschaften der hier beschriebenen Schaltungen sei noch folgendes erwähnt.

Unter dem Begriff «aktive Bode-Entzerrer» sollen Entzerrerstrukturen verstanden werden, die die folgenden Anforderungen erfüllen:

Sie sollen zumindest ein aktives Element als integralen Bestandteil des Entzerrers enthalten, weiterhin soll die Übertragungsfunktion durch (1) eindeutig bestimmt sein und schliesslich soll der Dämpfungshub $\Delta a(\omega,\vartheta)$ zumindest in einem gewissen Bereich unabhängig von der geforderten Grunddämpfung sein.

Die in Fig. 1 dargestellte Schaltung erfüllt diese Bedingungen. So gilt für einen hubsymmetrischen Entzerrer mit $P_1$ nach Fig. 2:

$$T_r(j\omega) = \frac{T(j\omega)}{T_o} = \frac{1 - \vartheta H_o \cdot H(j\omega)}{1 + \vartheta H_o \cdot H(j\omega)}, \qquad (1)$$

mit:

$$\vartheta = \frac{k - 1}{k + 1} \qquad 0 \leq k \leq \infty \quad |\vartheta| \leq 1, \qquad (2)$$

$$H_o = \frac{1 - \dfrac{p}{p+1}\, q_o}{1 + \dfrac{p}{p+1}\, q_o} \qquad q_o \geq O \quad |H_o| \leq 1, \qquad (3)$$

$$H(j\omega) = \left(1 + \frac{ZE}{W_o}\right)^{-2} \qquad (4)$$

für die Dimensionierung:

$$R_1 = W_o \cdot \frac{p}{1 + p}\, q_o - \alpha \qquad (5)$$

$$\text{mit:} \qquad \alpha = \frac{1}{y_{21E}} \left(1 + \frac{R_c}{R_2} \cdot \frac{1}{1 + p}\right) \qquad (6)$$

wobei $y_{21E}$ die komplexe Vorwärtssteilheit des Transistors in Emitterschaltung bezeichnet.

$$R_c = R_1 - \frac{1 + p}{p} \cdot \frac{1}{q_o} \cdot W_o \qquad (7)$$

$$p > \frac{R_c}{W_o + R_1} \qquad (8)$$

Anhand von Fig. 2 sei im folgenden noch der mit $P_1$ bezeichnete Hilfsvierpol, nämlich das wellenwiderstandsrichtige überbrückte T-Glied erläutert.

Wie aus der Schaltung von Fig. 2 unmittelbar zu erkennen ist, handelt es sich dabei in an sich bekannter Weise um ein überbrücktes T-Glied, in dessen Längszweigen die Widerstände $W_o$ geschaltet sind. Im Querzweig liegt ein Widerstand mit dem Widerstandswert $W_o^2/Z_E$ und im Überbrückungszweig liegt ein Widerstand $Z_E$, weil ja der Überbrückungszweig und der Querzweig hinsichtlich ihrer Bemessung widerstandsreziprok sind zu $W_o$.

In Fig. 2 ist selbstverständlich lediglich die Grundschaltung eines solchen überbrückten T-Gliedes gezeichnet. Je nach den Anforderungen an den Entzerrer können hier in bekannter Weise auch Kettenschaltungen aus solchen wellenwiderstandsrichtigen T-Gliedern verwendet werden.

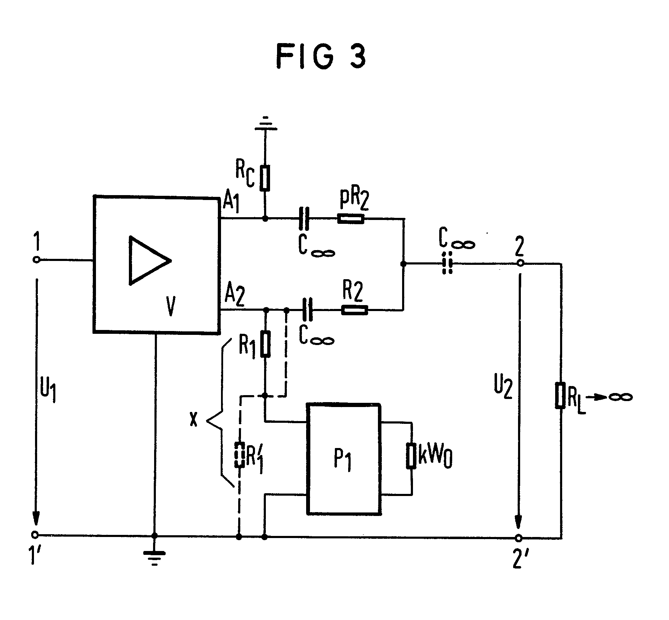

In Fig. 3 ist ein aktiver Bode-Entzerrer in allgemeiner Schaltungsform dargestellt. Zur besseren Übersicht wurden Gleichspannungsversorgungen nicht mehr eingezeichnet, auch sind wirkungsgleiche Elemente mit den gleichen Bezugsziffern wie in Fig. 1 bezeichnet, so dass die dort gegebene Beschreibung unmittelbar auch auf die Schaltung nach Fig. 3 analog anwendbar ist. Fig. 3 lässt noch erkennen, dass der dem Ausgang $A_1$ nachgeschaltete Kondensator $C\infty$ auch der Ausgangsklemme 2 vorgeschaltet sein kann, wie dies gestrichelt eingezeichnet ist. Wie einleitend bereits erwähnt, handelt es sich hier um eine Gleichstromabtrennung, für die gegebenenfalls noch andere Möglichkeiten denkbar sind.

Weiterhin ist in Fig. 3 eine mögliche Schaltvariante gestrichelt eingezeichnet. Es ist daraus zu erkennen, dass der Widerstand $R_1$ nicht zwingend dem wellenwiderstandsrichtigen T-Glied $P_1$ gewissermassen in Serie vorgeschaltet sein muss. Stattdessen kann auch z.B. bei hubunsymmetrischen Entzerrern ein Widerstand $R'_1$ parallel zum variablen Eingangswiderstand des wellenwiderstandsrichtigen T-Gliedes $P_1$ geschaltet werden, wobei selbstverständlich darauf zu achten ist, dass auch der Widerstand $R_1'$ zugleich mit dem Ausgang $A_2$ des Verstärkers V verbunden ist. Für den Verstärker V können an sich beliebige Verstärkungsanordnungen, beispielsweise auch Operationsverstärker, Verwendung finden. Auch kommen hierfür Verstärker mit Gegenkopplungsschleifen zwischen den Ausgängen $A_1$ und $A_2$ in Frage. Wesentlich ist nur, dass der Verstärker V zwei gleichwertige, gegenphasige, also invertierende Ausgänge $A_1$ und $A_2$ enthält. Diese Ausgänge müssen mit den Widerständen $pR_2$ und $R_2$ abgeschlossen sein und zudem muss einer davon, im Beispiel also der Verstärkerausgang $A_2$ mit eine veränderlichen Abschlussimpedanz X abgeschlossen sein.

Die Impedanz X, die sich ja aus dem Widerstand $R_1$ bzw. dem Widerstand $R'_1$ und dem Eingangswiderstand des wellenwiderstandsrichtigen T-Gliedes $P_1$ zusammensetzt, kann durch Veränderung des Abschlusswiderstandes $kW_o$ verändert werden. Insbesondere bei der Verwendung solcher Entzerrer in Trägerfrequenzsystemen oder auch in Regeneratoren von PCM-Übertragungssystemen wird man daran interessiert sein, den Entzerrer als einen sogenannten automatischen Entzerrer, d.h. also einen steuerbaren Entzerrer, auszubilden.

In diesem Fall ist es vorteilhaft, den Abschlusswiderstand $kW_o$ ganz oder teilweise durch einen steuerbaren Widerstand zu ersetzen. Insbesondere ist hierbei an PIN-Dioden oder auch an Heissleiter zu denken. In diesem Fall wird dann eine im Übertragungssystem erzeugte Steuerspannung zusätzlich unmittelbar der PIN-Diode oder dem Heissleiter zugeführt und damit der Widerstandswert des Abschlusswiderstandes $kW_o$ geändert.

## Patentansprüche

1. Entzerrerschaltung für Nachrichtensignale, die in der Art eines aktiven Bode-Entzerrers ausgebildet ist, unter Verwendung eines mit dem Eingangssignal ($U_1$) beaufschlagten Verstärkers (V) mit gegenphasigen Ausgängen ($A_1$, $A_2$) und mit einer nachgeschalteten Brückenschaltung, dadurch gekennzeichnet, dass ein erster Verstärkerausgang (A1) mit einem ersten Ende eines einen ersten Brückenzweig bildenden ersten reellen Widerstandes ($R_c$) und mit einem ersten Ende eines einen zweiten Brückenzweig bildenden zweiten reellen Widerstandes ($pR_2$) verbunden ist, dass ein zweiter Verstärkerausgang (A2) mit einem ersten Ende eines einen dritten Brückezweig bildenden dritten reellen Widerstandes ($R_2$) und einem ersten Ende eines einen vierten Brückenzweig bildenden Zweipols, der von einem mit Abschlusswiderstand (kWo) beschalteten, wellenwiderstandsrichtig überbrückten T-Glied (P1) gebildet wird und dem eingangsseitig entweder ein vierter reeller Widerstand ($R_1$) in Serie oder ein fünfter reeller Widerstand ($R'_1$) parallel vorgeschaltet ist, verbunden ist, dass ein zweites Ende des ersten reellen Widerstandes ($R_c$) und ein zweites Ende des Zweipols auf Bezugspotential (1', 2') liegen, und dass an den miteinander verbundenen zweiten Enden des zweiten reellen Widerstandes ($pR_2$) und des dritten reellen Widerstandes ($R_2$) die Ausgangsspannung ($U_2$) der Entzerrerschaltung gegen Bezugspotential (1', 2') anliegt.

2. Entzerrerschaltung nach Anspruch 1, dadurch gekennzeichnet, dass in wenigstens einem der Verstärkerausgänge ein Kondensator ($C\infty$) eingeschaltet ist.

3. Entzerrerschaltung nach einem der vorhergehenden Ansprüche, dadurch gekennzeichnet, dass der variable Abschlusswiderstand ($kW_o$) des überbrückten T-Gliedes ($P_1$) als steuerbarer Widerstand, insbesondere als PIN-Diode oder als Heissleiter, ausgebildet ist.

4. Entzerrerschaltung nach einem der vorhergehenden Ansprüche, gekennzeichnet durch seine Verwendung als automatischer Entzerrer in Regeneratoren von PCM-Übertragungssystemen.

## Claims

1. An equaliser circuit for communication signals which is constructed in the manner of an active Bode equaliser, using an amplifier (V) which is supplied with the input signal ($U_1$) and which has phase-opposing outputs ($A_1$, $A_2$) and a following bridge circuit, characterised in that a first amplifier output (A1) is connected to a first end of a first real resistor ($R_c$), which forms a first bridge arm, and to a first end of a second real resistor ($pR_2$), which forms a second bridge arm, that a second amplifier output (A2) is connected to a first end of a third real resistor ($R_2$), which forms a third bridge arm, and to a first end of a two-terminal network which forms a fourth bridge arm, is itself formed by a T-component (P1) connected to the terminating impedance (kWo) and bridged in accordance with the characteristic impedance, and at its input end is either connected in series with a fourth real resistor ($R_1$) or is connected in parallel with a fifth real resistor ($R'_1$), that a second end of the first real resistor ($R_c$) and a second end of the two-terminal network are connected to reference potential (1', 2') and that the second ends, which are connected to one another, of the second real resistor ($pR_2$) and the third real resistor ($R_2$) are connected to the output voltage ($U_2$) of the equaliser circuit relative to the reference potential (1', 2').

2. An equaliser circuit as claimed in claim 1, characterised in that a capacitor (C) is connected in at least one of the amplifier outputs.

3. An equaliser circuit as claimed in one of the preceding claims, characterised in that the variable terminating impedance ($kW_o$) of the bridged T-component ($P_1$) comprises a controllable impedance, in particular a PIN-diode or a hot conductor.

4. An equaliser circuit as claimed in one of the preceding claims, characterised by its use as an automatic equaliser in regenerators of PCM-transmission systems.

## Revendications

1. Circuit correcteur de distorsions pour des signaux d'information, qui est agencé à la manière d'un correcteur actif de distorsions de Bode et qui utilise un amplificateur (V) chargé par le signal d'entrée ($U_1$) et possédant des sorties ($A_1$, $A_2$) en opposition de phase, et un circuit en pont branché en aval, caractérisé par le fait qu'une première sortie (A1) de l'amplificateur est reliée à une première extrémité d'une première résistance réelle ($R_c$) constituant une première branche du pont et à une première extrémité d'une seconde résistance réelle ($pR_2$) constituant une seconde branche du pont, qu'une seconde sortie (A2) de l'amplificateur est reliée à une première entrée d'une troisième résistance réelle ($R_2$) formant une troisième branche du pont et à une première extrémité d'un dipôle constituant une quatrième branche du pont et qui est formée par un circuit en T (P1) ponté correctement du point de vue de l'impédance caractéristique et raccordé à une résistance terminale ($kW_o$) et au côté entrée duquel soit une quatrième résistance réelle ($R_1$) est branchée en série, soit une cinquième résistance réelle ($R'_1$) est branchée en parallèle, qu'une seconde extrémité de la première résistance réelle ($R_c$) et une seconde extrémité du dipôle sont placées à un potentiel de référence (1', 2'), et que la tension de sortie ($U_2$) du circuit correcteur de distorsions par rapport au potentiel de référence (1', 2') est appliqué aux secondes extrémités, reliées entre elles, de la seconde résistance réelle ($pR_2$) et de la troisième résistance réelle ($R_2$).

2. Circuit correcteur de distorsions suivant la revendication 1, caractérisé par le fait qu'un condensateur ($C\infty$) est raccordé à au moins l'une des sorties de l'amplificateur.

3. Circuit correcteur de distorsions selon l'une des revendications précédentes, caractérisé par le fait que la résistance terminale variable ($kW_o$) dur circuit en T pont ($P_1$) est réalisé sous la forme d'une résistance pouvant être commandée, notamment sous la forme d'une diode PIN ou d'une thermistance.

4. Circuit correcteur de distorsion suivant l'une des revendications précédentes, caractérisé par son utilisation en tant que correcteur automatique de distorsions dans des régénérateurs de systèmes de transmission MIC.

# FIG 1

# FIG 2

# FIG 3